# EUROPÄISCHE PATENTANMELDUNG

(11) **EP 4 151 957 A1**
(43) Veröffentlichungstag der Anmeldung: **22.03.2023**
(21) Anmeldenummer: 21197326.8
(22) Anmeldetag: 17.09.2021
(51) Int. Cl.: G01D 11/24, G01D 5/14, G01S 7/481, G01S 17/00

(54) **SENSORBAUGRUPPE UND SCHUTZSCHICHT**

(71) Anmelder: Vorwerk & Co. Interholding GmbH, 42270 Wuppertal (DE)
(72) Erfinder: BARTELS, Jascha, 45134 Essen (DE); RIETDORF, Hendrik, 12555 Berlin (DE); SCHMÜLLING, Stefan, 44789 Bochum (DE)
(74) Vertreter: Dr. Solf & Zapf Patent- und Rechtsanwalts PartG mbB

(57) **Zusammenfassung**

Die vorliegende Erfindung betrifft eine Sensorbaugruppe (1) mit mindestens einem Gehäuseteil (2) und mindestens einem Sensor (3), wobei der Sensor (3) an dem Gehäuseteil (2) befestigt ist, und wobei zumindest ein Teil (3a) des Sensors (3) für eine Rotation im Betriebszustand eingerichtet und ausgebildet ist.

Eine Sensorbaugruppe, die einen zuverlässigen Betrieb gewährleistet und das Risiko von Fehlern im System reduziert, wird dadurch realisiert, dass mindestens eine erste Schutzschicht (4) mit dem Gehäuseteil (2) verbunden ist, dass die erste Schutzschicht (4) mindestens eine Ausnehmung (5) aufweist, und dass die Ausnehmung (5) von dem rotierbaren Teil (3a) des Sensors (3) durchtreten wird, so dass sich die erste Schutzschicht (4) umlaufend zwischen Gehäuseteil (2) und rotierbarem Teil (3a) des Sensors (3) erstreckt und ein Eindringen von Schmutz in einen zumindest von dem Gehäuseteil (2) und der ersten Schutzschicht (4) begrenzten Gehäuseinnenraum (6) minimiert.

## Beschreibung

Die Erfindung betrifft eine Sensorbaugruppe und eine Schutzschicht für eine Sensorbaugruppe. Ferner betrifft die Erfindung die Verwendung einer Schutzschicht. Sensorbaugruppen sind im Stand der Technik in einer Vielzahl von Ausgestaltungen bekannt. Insbesondere bei sich autonom im Raum, insbesondere einer Bearbeitungsumgebung, bewegenden Haushaltsgeräten, insbesondere Reinigungsgeräten, werden Sensorbaugruppen, beispielsweise zur Erfassung der Umgebung des Haushaltsgerätes, eingesetzt. Übliche Sensorbaugruppen umfassen mindestens ein Gehäuseteil mit mindestens einem Sensor. Der Sensor ist an dem Gehäuseteil befestigt. Sensoren, mit denen beispielsweise die Umgebung eines Haushaltsgerätes erfassbar ist, weisen häufig rotierende Teile auf. Zumindest ein Teil des Sensors ist dabei für eine Rotation im Betriebszustand eingerichtet und ausgebildet.

Die aus dem Stand der Technik bekannten Sensorbaugruppen weisen den Nachteil auf, dass insbesondere die für eine Rotation zumindest eines Teils des Sensors im Betriebszustand erforderlichen Bauteile im Laufe des Betriebs verschmutzen und zu Falschmessungen oder Systemausfällen führen.

Der Erfindung liegt daher die Aufgabe zu Grunde, eine Sensorbaugruppe, eine Schutzschicht und eine Verwendung anzugeben, die einen zuverlässigen Betrieb gewährleisten und das Risiko von Fehlern im System reduzieren.

Die vorgenannte Aufgabe ist bei einer gattungsgemäßen Sensorbaugruppe gelöst mit dem Merkmalsinhalt des Kennzeichnungsteils des Anspruchs 1, nämlich dadurch, dass mindestens eine erste Schutzschicht mit dem Gehäuseteil verbunden ist. Die erste Schutzschicht weist mindestens eine Ausnehmung auf, die von dem rotierbaren Teil des Sensors durchtreten wird. Die erste Schutzschicht erstreckt sich folglich umlaufend zwischen Gehäuseteil und rotierbarem Teil des Sensors, wodurch ein Eindringen von Schmutz in einen zumindest von dem Gehäuseteil und der ersten Schutzschicht begrenzten Gehäuseinnenraum minimiert wird.

Vorzugsweise handelt es sich bei der Sensorbaugruppe um einen Laserdistanzsensor (LDS), der beispielsweise bei Haushaltsgeräten, insbesondere autonom bewegten Reinigungsgeräten, eingesetzt wird. Die Sensorbaugruppen müssen bei derartigen Geräten in relativ geringem Bauraum am oberen Teil des Haushaltsgerätes angeordnet werden, um eine 360°-Sicht zu ermöglichen. Folglich bildet die Sensorbaugruppe häufig den höchsten Punkt des Haushaltsgerätes und bestimmt damit die Gesamthöhe. Diese muss möglichst niedrig sein, um dem Haushaltsgerät, insbesondere einem autonom bewegten Reinigungsgerät, das Reinigen unter Möbeln zu ermöglichen, die einen geringen Abstand zum Boden aufweisen.

Die erste Schutzschicht ist derart mit dem Gehäuseteil verbunden, insbesondere beispielsweise verklebt oder verklemmt, dass von dem Gehäuseteil und der ersten Schutzschicht ein Gehäuseinnenraum begrenzt wird. Sämtliche Bauteile der Sensorbaugruppe, die innerhalb des Gehäuseinnenraums angeordnet sind, sind folglich vor Verschmutzung geschützt. Der rotierbare Teil des Sensors durchtritt die erste Schutzschicht und ist folglich das einzig verbleibende Teil, das der äußeren Schmutzeinwirkung ausgesetzt ist.

Die Ausnehmung ist auf den vorzugsweise rotationssymmetrischen Außendurchmesser des rotierbaren Teils des Sensors abgestimmt, vorzugsweise so, dass zwischen erster Schutzschicht und rotierbarem Teil des Sensors nur ein sehr geringer radialer Spalt verbleibt.

Im Regelfall soll eine Berührung zwischen der ersten Schutzschicht und dem rotierbaren Teil des Sensors vermieden werden. Die, insbesondere kreisrunde, Ausnehmung in der ersten Schutzschicht, ist dabei vorzugsweise derart gewählt, dass es in keiner Toleranzlage zu einer Berührung zwischen der ersten Schutzschicht und dem rotierbaren Teil des Sensors kommt.

Die Verschmutzung der Sensorbaugruppe, insbesondere des Laserdistanzsensors, wird verhindert, indem die erste Schutzschicht auf das mindestens eine Gehäuseteil, die sogenannte "Stationary Base", aufgebracht, insbesondere aufgeklebt wird. Das Gehäuseteil ist vorzugsweise die Basis der Sensorbaugruppe, insbesondere des Laserdistanzsensors. An dem Gehäuseteil ist vorzugsweise, insbesondere über ein Lager, insbesondere ein Kugellager, der rotierbare Teil des Sensors angeordnet. Ferner ist vorzugsweise der Motor zur Drehung des rotierbaren Teils des Sensors ebenfalls an dem Gehäuseteil angeordnet. Das Gehäuseteil bildet zudem die Schnittstelle zur Montage der Sensorbaugruppe an einem Haushaltsgerät, insbesondere an einem Reinigungsgerät. Vorzugsweise entspricht die Außenkontur der ersten Schutzschicht etwa der korrespondierenden Außenkontur des Gehäuseteils.

Die Erfindung hat gegenüber dem Stand der Technik den Vorteil, dass das Verhindern des Eindringens von Schmutz im Gegensatz zu aktiven Systemen, die zur Verhinderung des Eindringens von Schmutz beispielsweise einen Luftstrom verwenden, auch bei ausgeschaltetem Haushaltsgerät funktioniert, also auch dann, wenn dieses im ausgeschalteten Zustand durch einen Benutzer transportiert oder gereinigt wird. Zudem ist die Lösung kostengünstig herstell- und nachrüstbar.

Gemäß einer ersten Ausgestaltung der Sensorbaugruppe ist vorgesehen, dass mindestens eine zweite Schutzschicht vorhanden ist. Die zweite Schutzschicht ist derart angeordnet, dass die zweite Schutzschicht den rotierbaren Teil des Sensors zumindest teilweise abdeckt oder begrenzt. Beispielsweise weist der rotierbare Teil des Sensors mindestens eine Umfangswand auf. Vorzugsweise durchtritt der rotierbare Teil des Sensors die Ausnehmung mit der Umfangswand. Die Umfangswand weist vorzugsweise mindestens eine Öffnung auf bzw. ist im Montagezustand nach oben geöffnet. Die Öffnung wird vorteilhaft von der zweiten Schutzschicht verschlossen, indem die zweite Schutzschicht auf der endseitigen Außenkante der Umfangswand montiert, insbesondere verklebt, ist. Die zweite Schutzschicht begrenzt zusammen mit der Umfangswand einen Innenraum innerhalb des rotierbaren Teils des Sensors.

Die Begrenzung des rotierbaren Teils des Sensors mit einer zweiten Schutzschicht hat gegenüber dem Stand der Technik den Vorteil, dass der für die Sensoreinheit erforderliche Bauraum weiter reduziert ist. Zudem wird das Gewicht des rotierbaren Teils des Sensors reduziert, wodurch der antreibende Motor weniger belastet wird, der Energiebedarf reduziert und die Lebensdauer gesteigert wird.

Gemäß einer weiteren Ausgestaltung der Sensoreinheit ist vorgesehen, dass die erste Schutzschicht und die zweite Schutzschicht aus einem gemeinsamen Rohling hergestellt sind. Vorzugsweise ist vorgesehen, dass die zweite Schutzschicht der Materialbereich eines Rohlings ist, der für das Herstellen der Ausnehmung in der ersten Schutzschicht entfernt werden muss. Die erste Schutzschicht und die zweite Schutzschicht sind vorzugsweise aus einem identischen Material hergestellt oder weisen einen identischen Aufbau auf.

Diese Ausgestaltung hat den Vorteil, dass der für die Ausnehmung zu entfernende Teil umweit- und ressourcenschonend als zweite Schutzschicht weiterverwendet wird.

Gemäß einer weiteren Ausgestaltung der Sensorbaugruppe ist vorgesehen, dass zwischen dem rotierbaren Teil des Sensors und der ersten Schutzschicht ein radialer Spalt vorgesehen ist. Der radiale Spalt hat vorzugsweise eine radiale Erstreckung zwischen 0,1 mm und 1 mm. Ein derartiger Spalt verhindert zuverlässig das Eindringen von Schmutz. Vorzugsweise ist vorgesehen, dass der Spalt eine radiale Erstreckung zwischen 0,3 mm und 0,9 mm aufweist. Ganz besonders bevorzugt weist der Spalt eine radiale Erstreckung von genau 0,6 mm auf.

Insbesondere um einen möglichst kompakten Bauraum zu erzielen, hat sich gemäß einer weiteren Ausgestaltung der Sensorbaugruppe als vorteilhaft herausgestellt, wenn vorgesehen ist, dass die erste Schutzschicht und/oder die zweite Schutzschicht eine Dicke zwischen 0,1 mm und 1 mm aufweist. Mit einer derartig dünnen ersten Schutzschicht und/oder zweiten Schutzschicht kann ein sehr kompakter Bauraum der Sensoranordnung erreicht werden. Besonders bevorzugt ist vorgesehen, dass die erste Schutzschicht und/oder die zweite Schutzschicht eine Dicke zwischen 0,2 mm und 0,9 mm aufweist. Insbesondere ein Dicke zwischen 0,2 mm und 0,5 mm hat sich ferner als vorteilhaft herausgestellt. Vorteilhaft ist auch eine Dicke von genau 0,25 mm für die erste Schutzschicht und/oder die zweite Schutzschicht.

Eine weitere Ausgestaltung der Sensorbaugruppe sieht vor, dass die erste Schutzschicht und/oder die zweite Schutzschicht mindestens ein erstes Material und mindestens ein zweites Material aufweist. Das erste Material und das zweite Material sind vorzugsweise aus der nachfolgend genannten Liste von Materialien ausgewählt. Es ist sowohl vorgesehen, dass das erste Material und das zweite Material in einer Ebene angeordnet und miteinander verbunden sind und/oder es ist auch vorgesehen, dass ein erstes Material und mindestens ein zweites Material in unterschiedlichen Ebenen, also in verschiedenen Lagen der ersten Schutzschicht und/oder der zweiten Schutzschicht, angeordnet sind. Vorzugsweise ist mindestens ein Bereich aus einem ersten Material konzentrisch zu mindestens einem Bereich aus einem zweiten Material angeordnet.

Beispielsweise ist in Bezug auf die erste Schutzschicht vorgesehen, dass das zweite Material die Ausnehmung umgebend angeordnet ist. Auf diese Weise kann beispielsweise ein Material mit einer höheren Elastizität und/oder einem geringeren Reibungswiderstand nah an dem rotierbaren Teil der Sensoranordnung angeordnet werden, während das zweite Material für Stabilität sorgt. Bevorzugt ist das zweite Material, das die Ausnehmung umgebend angeordnet ist, zumindest teilweise, insbesondere vollständig, mit Polytetrafluorethylen (PTFE) beschichtet. Das die Ausnehmung umgebende, zweite Material weist vorzugsweise eine radiale Erstreckung zwischen 2 mm und 10 mm, insbesondere eine radiale Erstreckung von genau 6 mm auf.

Besonders bevorzugt ist vorgesehen, dass die Ausnehmung von einem Ring aus Polytetrafluorethylen (PTFE) umgeben ist oder von einem Ring aus einem Kunststoff, der mit Polytetrafluorethylen (PTFE) beschichtet ist. Der die Ausnehmung umgebende Ring wird von dem ersten Material der ersten Schutzschicht gebildet, die den Ring umgibt.

Gemäß einer weiteren Ausgestaltung der Sensoranordnung ist bevorzugt vorgesehen, dass das erste Material steifer als das zweite Material ausgebildet ist. Das erste Material setzt einer Verformung also einen größeren Widerstand entgegen als das zweite Material. Dadurch können unbeabsichtigte Berührungen zwischen rotierbarem Teil des Sensors und erster Schutzschicht ausgeglichen werden.

Die erste Schutzschicht dient bei Verwendung der Sensorbaugruppe insbesondere zum Abgrenzen eines Gehäuseinnenraums. Gemäß einer weiteren Ausgestaltung hat sich die erste Schutzschicht und/oder die zweite Schutzschicht als besonders widerstandsfähig gegen die üblichen Belastungen herausgestellt, wenn insbesondere vorgesehen ist, dass die erste Schutzschicht und/oder die zweite Schutzschicht mindestens eine Folienschicht und/oder mindestens eine Papierschicht und/oder mindestens eine Gewebeschicht aufweist.

Vorzugsweise ist die erste Schutzschicht und/oder die zweite Schutzschicht einlagig ausgebildet und besteht aus einer Folienschicht und/oder einer Papierschicht und/oder einer Gewebeschicht. Es ist auch vorgesehen, dass die erste Schutzschicht und/oder die zweite Schutzschicht mehrlagig ausgebildet ist und mindestens zwei Lagen, insbesondere mindestens drei Lagen, vorzugsweise mindestens vier Lagen, besonders bevorzugt mindestens fünf Lagen aufweist.

Eine weitere Ausgestaltung der Sensorbaugruppe sieht vor, dass die erste Schutzschicht und/oder die zweite Schutzschicht mindestens zwei Materiallagen aufweist. Insbesondere weist die erste Schutzschicht und/oder die zweite Schutzschicht eine Mehrzahl an Materiallagen auf. Jede Materiallage erstreckt sich über die gesamte Erstreckung der ersten Schutzschicht und/oder der zweiten Schutzschicht oder über einen Teil der Erstreckung der ersten Schutzschicht und/oder der zweiten Schutzschicht. Beispielsweise weist die erste Schutzschicht und/oder die zweite Schutzschicht eine Folienschicht und mindestens eine Gewebeschicht auf.

Ist mindestens eine Folienschicht vorhanden oder besteht die erste Schutzschicht und/oder die zweite Schutzschicht aus einer Folienschicht, ist die Folienschicht bevorzugt aus einem Kunststoff, insbesondere Polycarbonat (PC), Polyethylen (PE), Polyethylenterephthalat (PET) oder Polytetrafluorethylen (PEFE) gebildet und/oder die erste Schutzschicht und/oder die zweite Schutzschicht umfasst mindestens eine der derartigen Schichten. Ferner ist auch vorgesehen, dass die erste Schutzschicht und/oder die zweite Schutzschicht alternativ oder zusätzlich mindestens eine Folienschicht aus einem Metall aufweist oder aus diesem besteht, insbesondere aus Aluminium oder Kupfer.

Die erste Schutzschicht ist zumindest an dem Gehäuseteil befestigt. Dazu hat es sich gemäß einer weiteren Ausgestaltung der Sensoranordnung als vorteilhaft herausgestellt, wenn vorgesehen ist, dass die erste Schutzschicht kraft-, form- und/oder stoffschlüssig am Gehäuseteil befestigt ist. Beispielsweise ist vorgesehen, dass die erste Schutzschicht mit dem Gehäuseteil verklebt ist, insbesondere mit einer an der ersten Schutzschicht angeordneten Klebstoffschicht. Beispielsweise wird die erste Schutzschicht an dem ersten Gehäuseteil eingeklemmt, insbesondere wird die erste Schutzschicht bei dem Einklemmen zumindest teilweise verformt oder bleibt im Wesentlichen unverformt.

Die zweite Schutzschicht ist zumindest an dem rotierbaren Teil des Sensors, insbesondere dessen Umfangswand, befestigt. Dazu hat es sich gemäß einer weiteren Ausgestaltung der Sensoranordnung als vorteilhaft herausgestellt, wenn vorgesehen ist, dass die zweite Schutzschicht kraft-, form- und/oder stoffschlüssig am rotierbaren Teils des Sensors, insbesondere an der Umfangswand, befestigt ist. Beispielsweise ist vorgesehen, dass die zweite Schutzschicht mit dem rotierbaren Teil des Sensors, insbesondere der Umfangswand, verklebt ist, bevorzugt mit einer an der zweiten Schutzschicht angeordneten Klebstoffschicht. Die Klebefläche zwischen der Umfangswand und der zweiten Sensoranordnung ist beispielsweise ringförmig.

Insbesondere um im Fall einer unbeabsichtigten Berührung des rotierbaren Teils des Sensors und der ersten Schutzschicht ein Ausweichen der Folie zu ermöglichen, ohne diese zu beschädigen, ist gemäß einer weiteren Ausgestaltung vorgesehen, dass die erste Schutzschicht im Randbereich zu dem rotierbaren Teil des Sensors mindestens einen Schlitz aufweist. Bei einer Berührung kann sich der Schlitz aufweiten, ohne dass die erste Schutzschicht beschädigt wird. Ferner ist vorgesehen, dass die erste Schutzschicht eine Mehrzahl von Schlitzen, insbesondere eine Mehrzahl von gleichmäßig über den Umfang der Ausnehmung verteilten Schlitzen, aufweist. Sollte es zu einer unbeabsichtigten Berührung zwischen dem rotierbaren Teil des Sensors und der ersten Schutzschicht kommen, kann die Folie im Bereich der mehreren Schlitze ausweichen. Die Schlitze haben vorteilhaft eine radiale Erstreckung zwischen 0,1 mm und 5 mm.

Eine besonders bevorzugte Variante sieht vor, dass die Schlitze bzw. die zwischen den Schlitzen verbleibenden Bereiche die Funktion einer Bürstendichtung zu dem rotierbaren Teil des Sensors verwirklichen. Beispielsweise ist die Ausnehmung geringfügig kleiner als der Durchmesser des rotierbaren Teils des Sensors, so dass die zwischen den Schlitzen verbleibenden Bereiche der ersten Schutzschicht die Funktion einer Bürstendichtung zu dem rotierbaren Teil des Sensors verwirklichen. Die zwischen den Schlitzen verbleibenden Bereiche der ersten Schutzschicht gleiten folglich an der Oberfläche des rotierbaren Teils des Sensors und verhindern dadurch den Eintritt von Schmutzpartikeln in den Gehäuseinnenraum.

Gemäß einer weiteren Ausgestaltung der Sensorbaugruppe hat sich als vorteilhaft herausgestellt, wenn vorgesehen ist, dass der mindestens eine Schlitz oder die Schlitze radial oder tangential zur Ausnehmung ausgebildet ist bzw. sind. Bei einer radialen Ausrichtung der Schlitze sind diese auf den Mittelpunkt der Ausnehmung ausgerichtet. Bei einer tangentialen Ausrichtung erfolgt diese zum Innendurchmesser der Ausnehmung oder zu einem gedachten Durchmesser, der kleiner als die Ausnehmung ist, vorzugsweise um etwa zwischen 5 mm und 10 mm kleiner.

Insbesondere zur formschlüssigen Ausrichtung der ersten Schutzschicht an dem ersten Gehäuseteil hat sich gemäß einer weiteren Ausgestaltung der Sensorbaugruppe als vorteilhaft herausgestellt, wenn vorgesehen ist, dass die erste Schutzschicht mindestens eine weitere Ausnehmung, insbesondere mindestens zwei weitere Ausnehmungen, aufweist. Die mindestens eine Ausnehmung, insbesondere beide Ausnehmungen, dienen der Positionierung der ersten Schutzschicht auf dem ersten Gehäuseteil, insbesondere derart, dass ein formschlüssiges Zusammenwirken der Ausnehmung bzw. der Ausnehmungen mit korrespondierenden Vorsprüngen am Gehäuseteil erfolgt.

Beispielsweise sind am Gehäuseteil mindestens zwei kreisrunde Vorsprünge mit einem Durchmesser von etwa 1 mm angeordnet. Korrespondierend zu diesen Vorsprüngen weist die erste Schutzschicht entsprechende Ausnehmungen auf, so dass die erste Schutzschicht relativ zum Gehäuseteil in einer festen Position ausgerichtet werden kann.

Zur Befestigung der ersten Schutzschicht am ersten Gehäuseteil bzw. der zweiten Schutzschicht am rotierbaren Teil des Sensors ist gemäß einer weiteren Ausgestaltung vorgesehen, dass die erste Schutzschicht und/oder die zweite Schutzschicht auf mindestens einer Seite mindestens eine Klebstoffschicht aufweist. Es ist vorgesehen, dass die Klebstoffschicht zur Montage vollständig freigelegt wird. Dabei ist die Klebstoffschicht auf der ersten Schutzschicht insbesondere derart dimensioniert, dass nach der Montage an dem ersten Gehäuseteil freie Klebstoffflächen verbleiben, die nicht mit dem Gehäuseteil in Kontakt stehen, so dass Schmutzpartikel an den freien Klebstoffflächen haften können.

Es ist auch vorgesehen, dass die Klebstoffschicht beispielsweise nur im Randbereich der ersten Schutzschicht und/oder der zweiten Schutzschicht freigelegt wird, um in diesem Randbereich eine Verbindung zwischen dem ersten Gehäuseteil und der ersten Schutzschicht bzw. dem rotierbaren Teil des Sensors und der zweiten Schutzschicht herzustellen. Im inneren Bereich der ersten Schutzschicht und/oder der zweiten Schutzschicht verbleibt eine Abdeckschicht auf der Klebstoffschicht.

In Abhängigkeit von der Form des ersten Gehäuseteils ist gemäß einer weiteren Ausgestaltung der ersten Schutzschicht vorgesehen, dass die erste Schutzschicht vollständig eben ausgebildet ist. Die erste Schutzschicht erstreckt sich vollständig in einer Ebene und weist eine entsprechende Dicke auf.

Es ist alternativ dazu vorgesehen, dass die erste Schutzschicht eine dreidimensionale Flächenkontur aufweist. Beispielsweise ist die erste Schutzschicht aus einem Kunststoff tiefgezogen ausgebildet, so dass sie sich an eine Kontur des ersten Gehäuseteils und/oder weiterer Bauteile anfügen kann. Ferner ist vorgesehen, dass die erste Schutzschicht mindestens eine Aufwölbung aufweist, und dass sich die Aufwölbung die Ausnehmung umgebend erstreckt. Vorzugsweise fällt die erste Schutzschicht mit zunehmendem radialen Abstand zur Ausnehmung ausgehend von der Aufwölbung ab, so dass im Montagezustand Schmutz von der Ausnehmung weg in den Randbereich der ersten Schutzschicht geleitet wird. Auf diese Weise wird verhindert, dass Schmutz in den Spalt zwischen dem rotierbaren Teil des Sensors und der ersten Schutzschicht eindringt.

Ferner hat sich in diesem Zusammenhang als besonders vorteilhaft herausgestellt, wenn gemäß einer weiteren Ausgestaltung vorgesehen ist, dass die erste Schutzschicht einen die Ausnehmung zumindest teilweise, insbesondere vollständig, umgebenden Kragen aufweist. Der Kragen stellt eine lokale Erhöhung der ersten Schutzschicht dar, die das Eintreten von Schmutz in den Spalt zwischen rotierbarem Teil des Sensors und erster Schutzschicht verhindert. Vorzugsweise ist der Kragen durch Umformung der Folie oder als angeformtes Teil ausgebildet.

Die Montage der ersten Schutzschicht lässt sich gemäß einer weiteren Ausgestaltung vorteilhaft dadurch vereinfachen, dass die Außenkontur der ersten Schutzschicht kleiner als die Außenkontur des ersten Gehäuseteils ist. Insbesondere ist die Außenkontur umlaufend um 0,1 mm, vorzugsweise umlaufend um 0,2 mm, kleiner. Auf diese Weise wird ein unbeabsichtigtes Ablösen der ersten Schutzschicht von dem ersten Gehäuseteil verhindert. Zudem besteht bei der Montage eine gewisse Toleranz zur Anordnung der ersten Schutzschicht an dem ersten Gehäuseteil.

Insbesondere um die Sensorbaugruppe und/oder die erste Schutzschicht und/oder die zweite Schutzschicht zu identifizieren, beispielsweise um eventuelle Feldrückläufe einem Fertigungsdatum oder einer Revision zuzuordnen, ein weiteres Intervall abzufragen oder das Haushaltsgerät mit einer App zu verbinden, ist gemäß einer weiteren Ausgestaltung der Vorrichtung vorgesehen, dass die erste Schutzschicht und/oder die zweite Schutzschicht mindestens ein Identifikationsmittel aufweist. Beispielsweise umfasst das Identifikationsmittel mindestens einen Nahfeldkommunikationschip (NFC-Chip) und/oder mindestens einen Barcode und/oder mindestens einen Datamatrixcode. Der Datamatrixcode bzw. der Barcode sind vorzugsweise derart angeordnet, dass sie optisch auslesbar angeordnet sind. Das Identifikationsmittel ist beispielsweise auf die erste Schutzschicht und/oder die zweite Schutzschicht aufgedruckt oder aufgeklebt.

Die eingangs genannte Aufgabe ist vorteilhaft mit einem Haushaltsgerät, insbesondere Reinigungsgerät, gelöst, das zur autonomen Bewegung in einer Bearbeitungsumgebung ausgebildet und eingerichtet ist, wobei das Reinigungsgerät mindestens eine Sensorbaugruppe nach mindestens einem der vorstehend beschriebenen Ausführungsbeispiele aufweist.

Des Weiteren ist die Aufgabe durch eine erste Schutzschicht für eine Sensorbaugruppe gelöst, die mindestens eine Lage aus einem Folienmaterial mit mindestens einer Klebstoffschicht aufweist. Die Klebstoffschicht ist zumindest teilflächig, insbesondere vollflächig, mindestens auf eine erste Seite des Folienmaterials aufgebracht. Des Weiteren weist die erste Schutzschicht eine Abdeckschicht auf, die im Auslieferungszustand die Klebstoffschicht vollständig abdeckt und zumindest teilweise von dieser ablösbar ist. Die erste Schutzschicht weist mindestens eine Ausnehmung für den Durchtritt zumindest eines rotierbaren Teils des Sensors auf.

Des Weiteren ist erfindungsgemäß eine Verwendung einer Schutzschicht, insbesondere nach einem der vorstehenden Ausführungsbeispiele, vorgesehen, um ein Gehäuseteil gegen den Eintritt von Schmutz abzudichten, indem die Schutzschicht an dem Gehäuseteil der Sensorbaugruppe befestigt wird und in mindestens einer Ausnehmung von mindestens einem rotierbaren Teil der Sensoreinheit durchtreten wird.

Die Schutzschicht umfasst mindestens eine erste Lage aus einem Folienmaterial und mindestens eine auf das Folienmaterial aufgebrachte Klebstoffschicht und dient dem Abdichten des Gehäuseteils der Sensorbaugruppe.

Weitere vorteilhafte Ausgestaltungen der Erfindung ergeben sich aus der folgenden Figurenbeschreibung und den abhängigen Unteransprüchen.

Es zeigen:
- Fig. 1: ein Ausführungsbeispiel einer Sensorbaugruppe in perspektivischer Ansicht,
- Fig. 2: ein weiteres Ausführungsbeispiel einer Sensorbaugruppe, dargestellt ohne erste Schutzschicht in perspektivischer Ansicht,
- Fig. 3: ein Ausführungsbeispiel einer ersten Schutzschicht für eine Sensorbaugruppe gemäß Fig. 1 oder 2,
- Fig. 4: ein Ausführungsbeispiel einer ersten Schutzschicht für eine Sensorbaugruppe gemäß Fig. 1 oder 2,
- Fig. 5: ein Ausführungsbeispiel einer ersten Schutzschicht für eine Sensorbaugruppe gemäß Fig. 1 oder 2,
- Fig. 6: ein Ausführungsbeispiel einer ersten Schutzschicht für eine Sensorbaugruppe gemäß Fig. 1 oder 2,
- Fig. 7a: ein Ausführungsbeispiel einer ersten Schutzschicht für eine Sensorbaugruppe in geschnittener Seitenansicht,
- Fig. 7b: ein Ausführungsbeispiel einer ersten Schutzschicht für eine Sensorbaugruppe in geschnittener Seitenansicht,
- Fig. 8: den Aufbau einer ersten Schutzschicht für eine Sensorbaugruppe in Explosionsdarstellung,
- Fig. 9: ein Ausführungsbeispiel eines Haushaltsgerätes in perspektivischer Ansicht,
- Fig. 10: ein Ausführungsbeispiel einer Sensorbaugruppe in perspektivischer Ansicht,
- Fig. 11: ein Ausführungsbeispiel einer Sensorbaugruppe in geschnittener Seitenansicht, und
- Fig. 12: Ausführungsbeispiele einer ersten Schutzschicht und einer zweiten Schutzschicht.

In den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

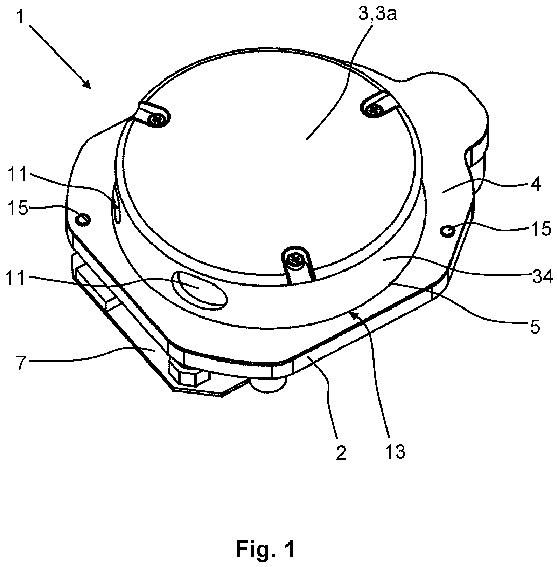

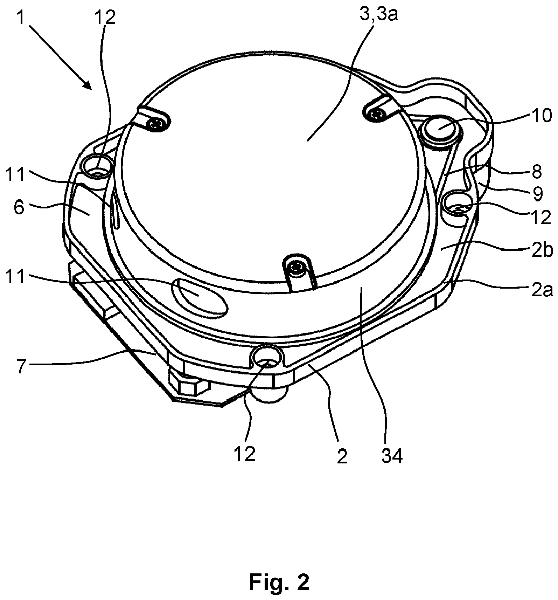

Fig. 1 und Fig. 2 zeigen jeweils ein Ausführungsbeispiel einer Sensorbaugruppe 1, die bei diesen Ausführungsbeispielen als Laserdistanzsensor (LDS) oder Laser-Doppler-Linien-Distanzsensor ausgebildet ist. Die Sensorbaugruppe 1 weist mindestens ein Gehäuseteil 2 und einen Sensor 3 auf. Ein Teil 3a des Sensors 3 ist für eine Rotation im Betriebszustand eingerichtet und ausgebildet.

Der rotierbare Teil 3a des Sensors 3 ist rotationssymmetrisch ausgebildet und steht aus dem Gehäuseteil 2 hervor. Mit dem Gehäuseteil 2 ist gemäß Fig. 1 eine erste Schutzschicht 4 verbunden, die in einer Ausnehmung 5 von dem rotierbaren Teil 3a des Sensors 3 durchtreten wird. Die erste Schutzschicht 4 ist folglich umlaufend zwischen Gehäuseteil 2 und rotierbarem Teil 3a des Sensors 3 angeordnet. Die erste Schutzschicht 4 begrenzt zusammen mit dem Gehäuseteil 2 einen Gehäuseinnenraum 6 - dargestellt in Fig. 2 - und verhindert das Eindringen von Schmutz in diesen.

An dem Gehäuseteil 2 ist ferner eine Platine 7 mit Anschlüssen zur Kontaktierung der Sensorbaugruppe 1 und der Steuerelektronik angeordnet. Das Gehäuseteil 2 ist gemäß Fig. 2 mit einem umlaufenden Rand 2a ausgebildet, der sich ausgehend von einem Gehäusegrund 2b erstreckt und eine Art Wanne bildet. Der rotierbare Teil 3a des Sensors 3 ist zumindest teilweise innerhalb der Wanne angeordnet und steht aus dieser hervor.

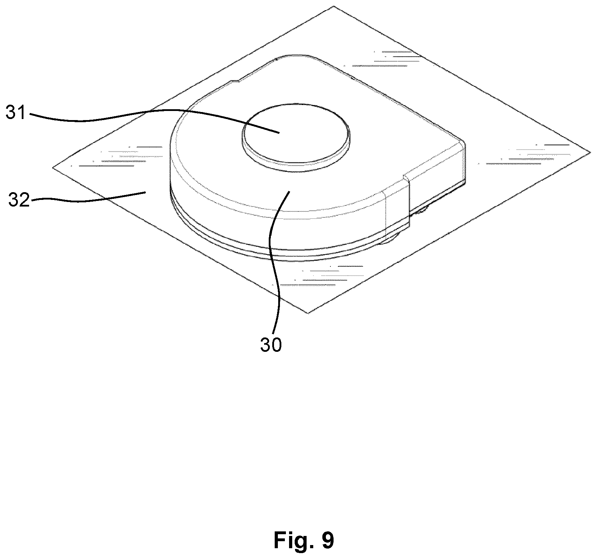

Der rotierbare Teil 3a des Sensors 3 ist über einen Riemen 8 mittels eines Motors 9 rotierbar. Der Riemen 8 ist oberhalb des Gehäusegrunds 2b angeordnet. Der Motor 9 selbst ist unterhalb des Gehäusegrunds 2b angeordnet und durchtritt den Gehäusegrund 2b mit einer Antriebswelle 10. Der rotierbare Teil 3a des Sensors 3 ist mit einer Schutzkappe abgedeckt, die in einer Umfangswand 34 eine Mehrzahl an Messausnehmungen 11, hier zum Aus- und Eintritt von Laserstrahlung, aufweist. Die Sensorbaugruppe 1 ist mit an dem Gehäuseteil 2 angeordneten Schraubenaufnahmen 12, beispielsweise an einem in Fig. 9 dargestellten Haushaltsgerät 30, befestigbar.

Im in Fig. 1 dargestellten Montagezustand sind die Schraubenaufnahmen 12 von der ersten Schutzschicht 4 abgedeckt. Zwischen der ersten Schutzschicht 4 und dem rotierbaren Teil 3a des Sensors 3 ist ein radialer Spalt 13 vorgesehen, der bei diesem Ausführungsbeispiel eine radiale Erstreckung von 0,6 mm aufweist. Die Lagerung des rotierbaren Teils 3a des Sensors 3 ist derart ausgebildet, dass der rotierbare Teil 3a in keiner Toleranzlage mit der ersten Schutzschicht 4 in Kontakt kommt. Bei dem in Fig. 1 dargestellten Ausführungsbeispiel ist die erste Schutzschicht 4 als Kunststofffolie mit einer Dicke von 0,2 mm ausgebildet.

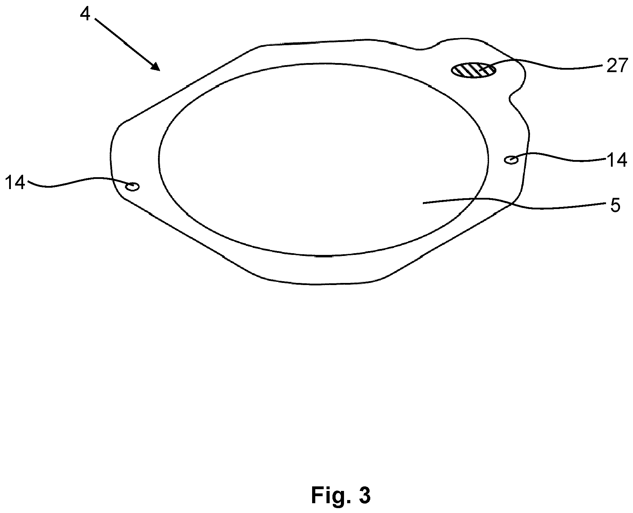

Fig. 3 zeigt ein Ausführungsbeispiel einer ersten Schutzschicht 4 mit einer Außenkontur, die im Wesentlichen der Außenkontur der Gehäuseteile 2 gemäß Fig. 1 und 2 entspricht. Die Ausnehmung 5 ist zum Durchtritt des rotierbaren Teils 3a des Sensors 3 kreisrund ausgebildet. Die erste Schutzschicht 4 weist bei diesem Ausführungsbeispiel zwei weitere Ausnehmungen 14 auf, die der Positionierung der ersten Schutzschicht 4 am Gehäuseteil 2 dienen, und die bei der Montage bzw. im Montagezustand gemäß Fig. 1 mit korrespondierenden Vorsprüngen 15 am Gehäuseteil 2 zusammenwirken. Die weiteren Ausnehmungen 14 sind ebenfalls kreisrund, jedoch deutlich kleiner als die zentrale Ausnehmung 5 ausgebildet.

Die erste Schutzschicht 4 weist ferner ein Identifikationsmittel 27 auf, das hier in Form eines Nahbereichskommunikations-Chips (NFC-Chip) ausgebildet ist. Das Identifikationsmittel 27 ist auf die erste Schutzschicht 4 aufgeklebt.

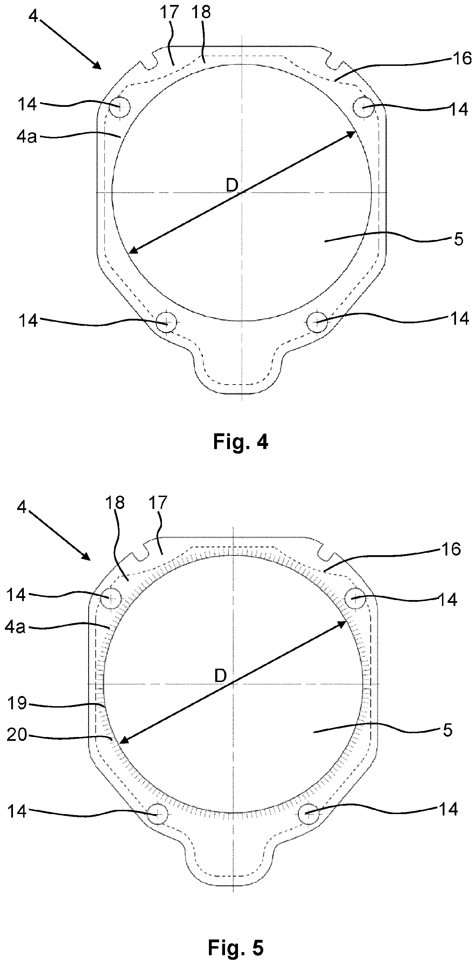

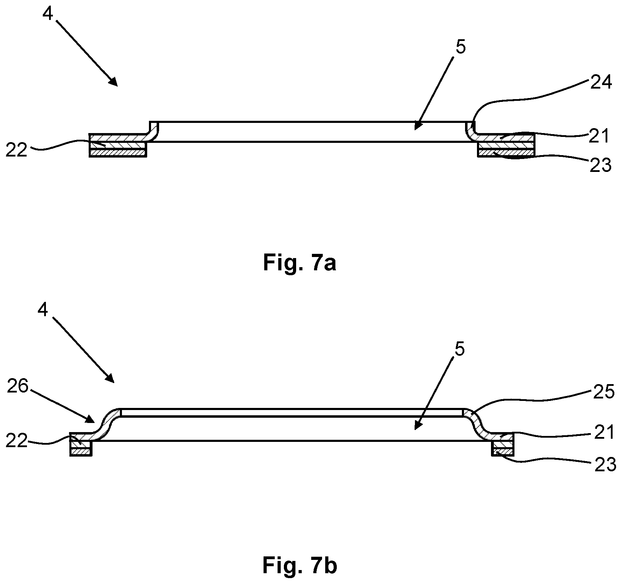

Fig. 4 zeigt ein weiteres Ausführungsbeispiel einer ersten Schutzschicht 4 für eine Sensorbaugruppe 1 gemäß Fig. 1 oder Fig. 2. Bei diesem Ausführungsbeispiel weist die erste Schutzschicht 4 neben der zentralen Ausnehmung 5 vier weitere Ausnehmungen 14 zur Positionierung der ersten Schutzschicht 4 am Gehäuseteil 2 auf. Ferner ist in Fig. 4 eine Stanzlinie 16 gezeigt, entlang welcher eine die Klebstoffschicht 22 - siehe Fig. 7a und Fig. 7b - der ersten Schutzschicht 4 abdeckende Abdeckschicht 23 vollständig durchstanzt ist. Auf diese Weise kann die Klebstoffschicht 22 in einem äußeren Bereich 17 der ersten Schutzschicht 4 freigelegt werden, während die Abdeckschicht 23 in einem inneren Bereich 18 der ersten Schutzschicht 4 auch im in Fig. 1 dargestellten Montagezustand auf der Klebstoffschicht verbleibt. Die Befestigung der ersten Schutzschicht 4 an einem Gehäuseteil 2 erfolgt über die Klebstoffschicht 22 im äußeren Bereich 17.

Fig. 5 zeigt ein weiteres Ausführungsbeispiel einer ersten Schutzschicht 4 für eine Sensorbaugruppe 1 gemäß Fig. 1 oder Fig. 2. Die erste Schutzschicht 4 weist wiederum vier weitere Ausnehmungen 14 zusätzlich zur zentralen Ausnehmung 5 auf. Auch hier ist die Stanzlinie 16 dargestellt, die den äußeren Bereich 17 von dem inneren Bereich 18 trennt. In einem zu dem rotierbaren Teil 3a des Sensors 3 ausgerichteten Randbereich 4a der ersten Schutzschicht 4, der die Ausnehmung 5 umgibt, sind bei diesem Ausführungsbeispiel eine Vielzahl über den Umfang der Ausnehmung 5 verteilte Schlitze 19 ausgebildet. Die Schlitze 19 sind radial ausgerichtet und erstrecken sich im Randbereich 4a. Der Innendurchmesser D der Ausnehmung 5 ist bei diesem Ausführungsbeispiel geringfügig kleiner als der Außendurchmesser des rotierbaren Teils 3a des Sensors 3, so dass die zwischen den Schlitzen 19 verbleibenden Bereiche 20 der ersten Schutzschicht 4 die Funktion einer Bürstendichtung zu dem rotierbaren Teil 3a des Sensors 3 verwirklichen und so ein Eindringen von Schmutz verhindern.

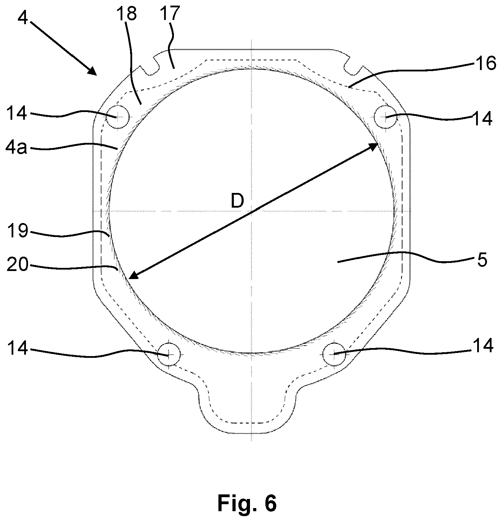

Fig. 6 zeigt ein weiteres Ausführungsbeispiel einer ersten Schutzschicht 4 für eine Sensorbaugruppe 1 gemäß Fig. 1 oder Fig. 2. Die erste Schutzschicht 4 weist vier weitere Ausnehmungen 14 zusätzlich zur zentralen Ausnehmung 5 auf. Die Stanzlinie 16 trennt den äußeren Bereich 17 von dem inneren Bereich 18. In einem zu dem rotierbaren Teil 3a des Sensors 3 ausgerichteten Randbereich 4a, der die Ausnehmung 5 umgibt, sind bei diesem Ausführungsbeispiel eine Vielzahl über den Umfang der Ausnehmung 5 verteilte Schlitze 19 ausgebildet. Die Schlitze 19 sind tangential zur Ausnehmung 5 ausgerichtet. Der Innendurchmesser D der Ausnehmung 5 ist bei diesem Ausführungsbeispiel geringfügig kleiner als der Außendurchmesser des rotierbaren Teils 3a des Sensors 3, so dass die zwischen den Schlitzen 19 verbleibenden Bereiche 20 der ersten Schutzschicht 4 die Funktion einer Bürstendichtung zu dem rotierbaren Teil 3a des Sensors 3 verwirklichen und so ein Eindringen von Schmutz verhindern.

Fig. 7a zeigt ein Ausführungsbeispiel einer ersten Schutzschicht 4 in geschnittener Seitenansicht. In Draufsicht ist dieses Ausführungsbeispiel im Wesentlichen wie das Ausführungsbeispiel der Fig. 2 ausgebildet. Die erste Schutzschicht 4 umfasst neben einer Folienschicht 21 eine Klebstoffschicht 22 sowie eine die Klebstoffschicht 22 abdeckende Abdeckschicht 23. Die Ausnehmung 5 ist von einem hervorstehenden Kragen 24 umgeben, der durch Aufwölben der Folienschicht 21 hergestellt ist. Der Kragen 24 verhindert das Eindringen von Schmutz in den Spalt 13 zwischen dem rotierbaren Teil 3a des Sensors 3 und der ersten Schutzschicht 4.

Fig. 7b zeigt ein weiteres Ausführungsbeispiel einer ersten Schutzschicht 4 in geschnittener Seitenansicht. Der Aufbau entspricht dem Aufbau gemäß Fig. 7a, d. h. unterhalb einer Folienschicht 21 sind eine Klebstoffschicht 22 sowie eine Abdeckschicht 23 angeordnet. Die erste Schutzschicht 4 weist eine die Ausnehmung 5 umgebende Aufwölbung 25 auf, von der ausgehend die erste Schutzschicht 4 mit zunehmendem radialen Abstand zur Ausnehmung 5 abfällt, so dass Schmutz von der Ausnehmung 5 weg in den Randbereich 26 der ersten Schutzschicht 4 geführt wird.

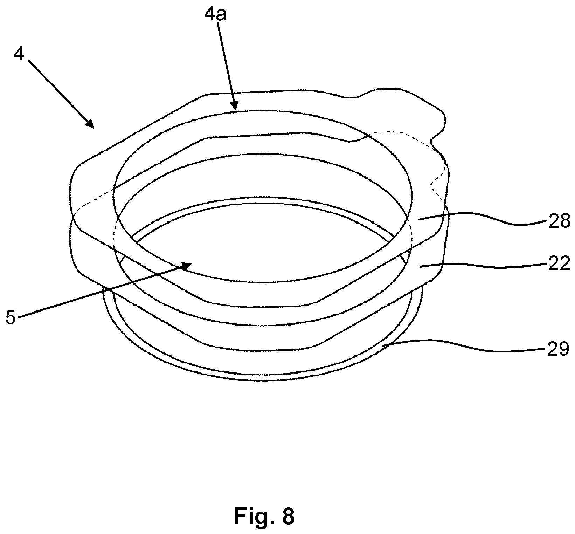

Fig. 8 zeigt beispielhaft den Aufbau einer ersten Schutzschicht 4, die aus unterschiedlichen Materialien hergestellt ist. Die erste Schutzschicht 4 umfasst eine Trägerschicht 28, an der eine ringförmige Innenrandschicht 29 aus einem zweiten

Material mittels einer Klebstoffschicht 22 befestigt ist. Die Innenrandschicht 29 bildet den Randbereich 4a der Ausnehmung 5 und ist weicher als das Material der Trägerschicht 28. Unterhalb der Trägerschicht 28 ist die Klebstoffschicht 22 zur Befestigung der ersten Schutzschicht 4 an dem Gehäuseteil 2 angeordnet.

Fig. 9 zeigt ein Ausführungsbeispiel eines Haushaltsgerätes 30, in dem eine Sensorbaugruppe 1 gemäß Fig. 1 verbaut ist. Das Haushaltsgerät 30 ist hier als Reinigungsgerät, insbesondere Staubsauger, ausgestaltet und ist zur autonomen Bewegung in einer Bearbeitungsumgebung 32 ausgebildet und eingerichtet. Die Sensorbaugruppe 1 gemäß Fig. 1 ist in einem Sensorturm 31 des Haushaltsgerätes 30 verbaut und dient zur Erfassung sowie Kartierung der das Haushaltsgerät 30 umgebenden Bearbeitungsumgebung 32.

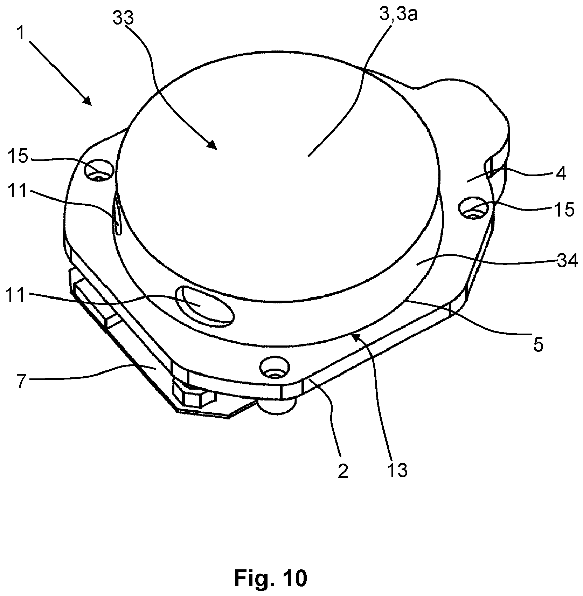

Fig. 10 zeigt ein Ausführungsbeispiel einer Sensorbaugruppe 1, die bei diesen Ausführungsbeispielen als Laserdistanzsensor (LDS) oder Laser-Doppler-Linien-Distanzsensor ausgebildet ist. Die Sensorbaugruppe 1 weist mindestens ein Gehäuseteil 2 und einen Sensor 3 auf. Ein Teil 3a des Sensors 3 ist für eine Rotation im Betriebszustand eingerichtet und ausgebildet.

Der rotierbare Teil 3a des Sensors 3 ist rotationssymmetrisch ausgebildet und steht aus dem Gehäuseteil 2 hervor. Mit dem Gehäuseteil 2 ist gemäß Fig. 10 eine erste Schutzschicht 4 verbunden, die in einer Ausnehmung 5 von dem rotierbaren Teil 3a des Sensors 3 durchtreten wird. An dem Gehäuseteil 2 ist ferner eine Platine 7 mit Anschlüssen zur Kontaktierung der Sensorbaugruppe 1 und der Steuerelektronik angeordnet. Das Gehäuseteil 2 ist gemäß Fig. 2 mit einem umlaufenden Rand 2a ausgebildet, der sich ausgehend von einem Gehäusegrund 2b erstreckt und eine Art Wanne bildet. Der rotierbare Teil 3a des Sensors 3 ist zumindest teilweise innerhalb der Wanne angeordnet und steht aus dieser hervor.

Der rotierbare Teil 3a des Sensors 3 weist eine Umfangswand 34 auf, mit der der rotierbare Teil 3a die Ausnehmung 5 durchtritt. An der von der ersten Schutzschicht 4 abgewandten Endseite der Umfangswand 34 ist eine zweite Schutzschicht 33 an dem rotierbaren Teil 3a befestigt. Die zweite Schutzschicht 33 begrenzt zusammen mit der Umfangswand 34 einen Innenraum 37 des rotierbaren Teils 3a des Sensors 3.

Die Umfangswand 34 weist eine Mehrzahl an Messausnehmungen 11, hier zum Aus- und Eintritt von Laserstrahlung, auf.

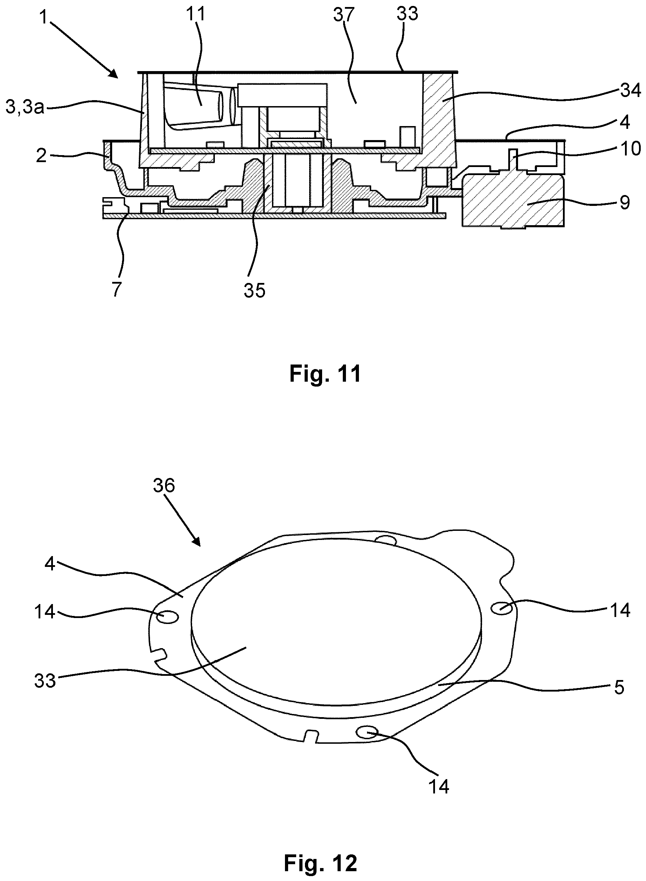

Fig. 11 zeigt ein Ausführungsbeispiel einer Sensoranordnung 1 in geschnittener Seitenansicht. Die Sensorbaugruppe 1 ist teilweise montiert. An der Unterseite des Gehäuseteils 2 ist die Platine 7 für die Steuerung angeordnet. In dem Gehäuseteil 2 ist ferner ein Lager 35 angeordnet, mit dem der rotierbare Teil 3a des Sensors 3 drehbar gelagert ist. Der rotierbare Teil 3a des Sensors 3 weist eine Umfangswand 34 auf, an deren von dem Gehäuseteil 2 abgewandten Endseite, insbesondere stirnseitig, eine zweite Schutzschicht 33 befestigt, hier angeklebt, ist. Die zweite Schutzschicht 33 begrenzt zusammen mit der Umfangswand 34 einen Innenraum des rotierbaren Teils 3a des Sensors 3. Die Umfangswand 34 weist im von dem Gehäuseteil 2 abgewandten Endbereich eine, insbesondere oberseitige, Öffnung auf, die von der zweiten Schutzschicht 33 verschlossen ist.

Fig. 12 zeigt ein Ausführungsbeispiel einer ersten Schutzschicht 4 und einer zweiten Schichtschicht 33, die aus einem gemeinsamen Rohling 36 herausgetrennt worden sind. Das die erste Schutzschicht 4 umgebende Material ist nicht mehr dargestellt. Die zweite Schutzschicht 33 ist der Materialabschnitt, der zur Ausbildung der Ausnehmung 5 in der ersten Schutzschicht 4 herausgetrennt wird. Die zweite Schutzschicht 33 ist gemäß Fig. 12 optisch etwas erhöht dargestellt. Die zweite Schutzschicht 33 ist unmittelbar nach dem Heraustrennen bereits fertig konfektioniert und kann unmittelbar auf die Umfangswand 34 eines rotierbaren Teils 3a eines Sensors 3 aufgeklebt werden.

Die Erfindung ist nicht auf die dargestellten und beschriebenen Ausführungsbeispiele beschränkt, sondern umfasst auch alle im Sinne der Erfindung gleichwirkenden Ausführungen. Es wird ausdrücklich betont, dass die Ausführungsbeispiele nicht auf alle Merkmale in Kombination beschränkt sind, vielmehr kann jedes einzelne Teilmerkmal auch losgelöst von allen anderen Teilmerkmalen für sich eine erfinderische Bedeutung haben. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmale definiert sein. Dies bedeutet, dass grundsätzlich praktisch jedes Einzelmerkmal des Anspruchs 1 weggelassen beziehungsweise durch mindestens ein an anderer Stelle der Anmeldung offenbartes Einzelmerkmal ersetzt werden kann.

### Bezugszeichenliste

- 1: Sensorbaugruppe
- 2: Gehäuseteil
- 2a: Gehäuserand
- 2b: Gehäusegrund
- 3: Sensor
- 3a: Rotierbarer Teil des Sensors 3
- 4: Erste Schutzschicht
- 4a: Randbereich von 4 zu 5
- 5: Ausnehmung
- 6: Gehäuseinnenraum
- 7: Platine
- 8: Riemen
- 9: Motor
- 10: Antriebswelle
- 11: Messausnehmungen
- 12: Schraubenaufnahmen
- 13: Radialer Spalt
- 14: Ausnehmungen
- 15: Vorsprünge
- 16: Stanzlinie
- 17: Äußerer Bereich der erste Schutzschicht 4
- 18: Innerer Bereich der erste Schutzschicht 4
- 19: Schlitze
- 20: Bereiche
- 21: Folienschicht
- 22: Klebstoffschicht
- 23: Abdeckschicht
- 24: Kragen
- 25: Aufwölbung
- 26: Äußerer Randbereich
- 27: Identifikationsm ittel
- 28: Trägerschicht
- 29: Innenrandschicht
- 30: Haushaltsgerät
- 31: Sensorturm
- 32: Bearbeitungsumgebung
- 33: Zweite Schutzschicht
- 34: Umfangswand
- 35: Lager
- 36: Rohling
- 37: Innenraum

- D: Innendurchmesser der Ausnehmung 5

## Patentansprüche

1. Sensorbaugruppe (1) mit mindestens einem Gehäuseteil (2) und mindestens einem Sensor (3), wobei der Sensor (3) an dem Gehäuseteil (2) befestigt ist, und wobei zumindest ein Teil (3a) des Sensors (3) für eine Rotation im Betriebszustand eingerichtet und ausgebildet ist,
**dadurch gekennzeichnet, dass**
mindestens eine erste Schutzschicht (4) mit dem Gehäuseteil (2) verbunden ist, dass die erste Schutzschicht (4) mindestens eine Ausnehmung (5) aufweist, und dass die Ausnehmung (5) von dem rotierbaren Teil (3a) des Sensors (3) durchtreten wird, so dass sich die erste Schutzschicht (4) umlaufend zwischen Gehäuseteil (2) und rotierbarem Teil (3a) des Sensors (3) erstreckt und ein Eindringen von Schmutz in einen zumindest von dem Gehäuseteil (2) und der ersten Schutzschicht (4) begrenzten Gehäuseinnenraum (6) minimiert.

2. Sensorbaugruppe (1) nach Anspruch 1,
**dadurch gekennzeichnet, dass**
mindestens eine zweite Schutzschicht (33) vorhanden ist, und dass die zweite Schutzschicht (33) den rotierbaren Teil (3a) des Sensors (3) zumindest teilweise abdeckt, insbesondere dass die zweite Schutzschicht (33) auf eine Umfangswand (34) des rotierbaren Teils (3a) des Sensors (3) aufgebracht ist.

3. Sensorbaugruppe (1) nach Anspruch 2,
**dadurch gekennzeichnet, dass**
die erste Schutzschicht (4) und die zweite Schutzschicht (33) aus einem gemeinsamen Rohling hergestellt sind.

4. Sensorbaugruppe (1) nach einem der Ansprüche 1 bis 3,
**dadurch gekennzeichnet, dass**
zwischen dem rotierbaren Teil (3a) des Sensors (3) und der ersten Schutzschicht (4) ein radialer Spalt (13) vorgesehen ist, insbesondere ein radialer Spalt (13) mit einer Erstreckung zwischen 0,1 mm und 1 mm, insbesondere zwischen 0,3 mm und 0,9 mm, vorzugsweise genau 0,6 mm und/oder dass die erste Schutzschicht (4) und/oder die zweite Schutzschicht (33) eine Dicke zwischen 0,1 mm und 1 mm aufweist, insbesondere eine Dicke zwischen 0,2 mm und 0,9 mm, bevorzugt eine Dicke zwischen 0,2 mm und 0,5 mm, besonders bevorzugt eine Dicke von genau 0,25 mm aufweist.

5. Sensorbaugruppe (1) nach einem der Ansprüche 1 bis 4,
**dadurch gekennzeichnet, dass**
die erste Schutzschicht (4) und/oder die zweite Schutzschicht (33) mindestens eine Folienschicht und/oder mindestens eine Papierschicht und/oder mindestens eine Gewebeschicht aufweist, bevorzugt dass die erste Schutzschicht (4) und/oder die zweite Schutzschicht (33) mindestens eine Folienschicht aus einem Kunststoff, insbesondere Polycarbonat (PC), Polyethylen (PE), Polyethylenterephthalat (PET) oder Polytetrafluorethylen (PTFE) aufweist und/oder mindestens eine Folienschicht aus einem Metall, insbesondere Aluminium oder Kupfer, aufweist.

6. Sensorbaugruppe (1) nach einem der Ansprüche 1 bis 5,
**dadurch gekennzeichnet, dass**
die erste Schutzschicht (4) und/oder die zweite Schutzschicht (33) mindestens ein erstes Material und mindestens ein zweites Material aufweist, vorzugsweise dass das zweite Material die Ausnehmung (5) umgebend angeordnet ist, bevorzugt dass das zweite Material mit Polytetrafluorethylen (PTFE) beschichtet ist, besonders bevorzugt dass das zweite Material eine radiale Erstreckung zwischen 2 mm und 10 mm, bevorzugt 6 mm, hat und/oder dass das erste Material steifer als das zweite Material ausgebildet ist.

7. Sensorbaugruppe (1) einem der Ansprüche 1 bis 6,
**dadurch gekennzeichnet, dass**
die erste Schutzschicht (4) und/oder die zweite Schutzschicht (33) mindestens zwei Materiallagen aufweist, insbesondere eine Mehrzahl an Materiallagen aufweist, und dass sich jede Materiallage zumindest über einen Teil der Erstreckung der ersten Schutzschicht (4) und/oder der zweiten Schutzschicht (33) erstreckt und/oder dass die erste Schutzschicht (4) kraft-, form- und/oder stoffschlüssig am Gehäuseteil (2) befestigt ist.

8. Sensorbaugruppe (1) nach einem der Ansprüche 1 bis 7,
**dadurch gekennzeichnet, dass**
die erste Schutzschicht (4) im Randbereich (18) zu dem rotierbaren Teil (3a) des Sensors (3) mindestens einen Schlitz (19) aufweist, insbesondere eine Mehrzahl von Schlitzen (19) aufweist, bevorzugt dass die Schlitze (19) die Funktion einer Bürstendichtung zu dem rotierbaren Teil (3a) des Sensors (3) verwirklichen, besonders bevorzugt dass der mindestens eine Schlitz (19) oder die Schlitze (19) radial oder tangential zur Ausnehmung (5) ausgebildet ist/sind.

9. Sensorbaugruppe (1) nach einem der Ansprüche 1 bis 8,
**dadurch gekennzeichnet, dass**
die erste Schutzschicht (4) mindestens eine weitere Ausnehmung (14), insbesondere mindestens zwei weitere Ausnehmungen (14) aufweist, und dass mindestens eine, insbesondere beide, der weiteren Ausnehmungen (14) zur Positionierung der ersten Schutzschicht (4) an dem ersten Gehäuseteil (2) dient/dienen, vorzugsweise durch formschlüssiges Zusammenwirken mit korrespondierenden Vorsprüngen (15) am Gehäuseteil (2) und/oder dass die Außenkontur der ersten Schutzschicht (4) kleiner als die Außenkontur des Gehäuseteils (1) ist, insbesondere umlaufend um 0,1 mm kleiner, vorzugsweise umlaufend um 0,2 mm kleiner.

10. Sensorbaugruppe (1) nach einem der Ansprüche 1 bis 8,
**dadurch gekennzeichnet, dass**
die erste Schutzschicht (4) und/oder die zweite Schutzschicht (33) auf mindestens einer Seite mindestens eine Klebstoffschicht (22) aufweist, dass die Klebstoffschicht (22) vollständig oder teilweise freigelegt ist, insbesondere dass die Klebstoffschicht (22) auf der ersten Schutzschicht (4) derart dimensioniert ist, dass freie Klebstoffflächen verbleiben, die nicht mit dem Gehäuseteil (2) in Kontakt stehen, so dass Schmutzpartikel an den freien Klebstoffflächen haften können.

11. Sensorbaugruppe (1) nach einem der Ansprüche 1 bis 10,
**dadurch gekennzeichnet, dass**
die erste Schutzschicht (4) mindestens einen die Ausnehmung (5) zumindest teilweise, insbesondere vollständig, umgebenden Kragen (24) aufweist, vorzugsweise dass der Kragen (24) durch Umformung der Folie oder als angeformtes Teil ausgebildet ist und/oder dass die erste Schutzschicht (4) vollständig eben ausgebildet ist oder dass die erste Schutzschicht (4) eine dreidimensionale Flächenkontur aufweist, insbesondere dass die erste Schutzschicht (4) mindestens eine Aufwölbung (25) aufweist, und dass sich die Aufwölbung (25) die Ausnehmung (5) umgebend erstreckt und die erste Schutzschicht (5) mit zunehmendem radialen Abstand zur Ausnehmung (5) abfällt, so dass Schmutz von der Ausnehmung (5) weg in den Randbereich geleitet wird.

12. Sensorbaugruppe (1) nach einem der Ansprüche 1 bis 11,
**dadurch gekennzeichnet, dass**
die erste Schutzschicht (4) und/oder die zweite Schutzschicht (33) mindestens ein Identifikationsmittel (27) aufweist, insbesondere dass das Identifikationsmittel (27) mindestens einen NFC-Chip und/oder mindestens einen Barcode und/oder mindestens einen Data Matrix Code aufweist.

13. Haushaltsgerät (30), insbesondere Reinigungsgerät, das zur autonomen Bewegung in einer Bearbeitungsumgebung (32) ausgebildet und eingerichtet ist, aufweisend mindestens eine Sensorbaugruppe (1) nach einem der Ansprüche 1 bis 12.

14. Erste Schutzschicht (4) für eine Sensorbaugruppe (1), insbesondere nach einem der Ansprüche 1 bis 12, aufweisend mindestens eine Lage aus einem Folienmaterial, mindestens eine Klebstoffschicht (22), wobei die Klebstoffschicht (22) zumindest teilflächig mindestens auf eine erste Seite des Folienmaterials aufgebracht ist, und mindestens eine Abdeckschicht, wobei die Abdeckschicht im Auslieferungszustand die Klebstoffschicht (22) vollständig abdeckt und zumindest teilweise von dieser ablösbar ist, wobei die erste Schutzschicht (4) mindestens eine Ausnehmung (5) für den Durchtritt zumindest eines rotierbaren Teils (3a) eines Sensors (3) aufweist.

15. Verwendung einer ersten Schutzschicht (4), insbesondere nach Anspruch 14, aufweisend mindestens eine erste Schicht aus einem Folienmaterial und mindestens eine auf das Folienmaterial aufgebrachte Klebstoffschicht (22) zum Abdichten eines Gehäuseteils (22) einer Sensorbaugruppe (1), insbesondere nach einem der Ansprüche 1 bis 12, gegen den Eintritt von Schmutz durch Befestigen der ersten Schutzschicht (4) an dem Gehäuseteil (2) der Sensorbaugruppe (1), wobei die erste Schutzschicht (4) in einer Ausnehmung (5) von mindestens einem rotierbaren Teil (3a) der Sensoreinheit (1) durchtretbar ist.
